# EUROPEAN PATENT APPLICATION

(11) **EP 0 989 352 A2**
(43) Date of publication of application: **29.03.2000**
(21) Application number: 99307361.8
(22) Date of filing: 16.09.1999
(51) Int. Cl.: F16P 3/00

(54) **Control system for a machine and operating panel for use therewith and a food product slicer including said control system**

(30) Priority: 25.09.1998 GB 9820797
(71) Applicant: GEC AVERY LIMITED, Warley, West Midlands B66 2LP (GB)
(72) Inventor: Dullemen, Marlies van, 2314 EN Leiden (NL); Commandeur, Rudolfus Adrianus, 1483 TJ De Rijp (NL)
(74) Representative: Branfield, Henry Anthony

(57) **Abstract**

A control system for a machine, in particular a slicer, comprises a microprocessor, and an operating panel, including a front plate having a field for an on-switch (1). A capacitive switch is arranged behind the field on the front plate and is included in a circuit of the control system. There is arranged at least one safety switch at least partly around the position of the on-switch and connected to the microprocessor to prevent the on-switch from switching if the safety switch is activated/not activated.

## Description

The present invention relates to a control system for a machine, in particular a slicer, comprising a microprocessor, and an operating panel including a front plate having a field for an on-switch, and a capacitive switch arranged behind the field on the front plate and being included in a circuit of the control system.

In known control systems there is a risk that if a person is cleaning the operating panel of the machine, the on-switch may be actuated unintentionally. This might cause a dangerous situation.

The object of the present invention is to provide a control system in which the risk of unintentional actuation of the on-switch is minimized.

According to the present invention there is provided a control system for a machine comprising a microprocessor, and an operating panel, including a front plate having a defined field for an on-switch and and one or more safety switches each comprising a capacitive switch arranged to provide said field behind the front plate and being included in a circuit of the control system, characterized in that there is arranged at least one said safety switch at least partly around the position of the defined field for the on-switch and connected to the microprocessor to prevent the functioning of the on-switch if the safety switch is activated or not activated as appropriate.

There is further provided an operating panel for a machine, including a control system as above.

There is yet further provided a slicer comprising a control system or an operating panel as above,

For this purpose, the control system according to the invention is characterized in that there is arranged at least one safety circuit at least partly around the position of the on-switch and connected to the microprocessor to prevent the on-switch from switching if the safety switch is activated or not activated, as may be designed into the control system.

In this manner, the on-switch will only respond to an actuation if it is actuated in the correct manner. For example, the control system may be configured such that the on-switch only responds to an actuation if it is the one and only switch that has been touched. In the case that the safety switch is actuated simultaneously or shortly before touching the on-switch the system will not respond. Thus, if the operating panel is being wiped with a cloth, the safety switch, if it is positioned around the on-switch, is passed before the on-switch is reached and so the on-switch will not respond.

Another possibility is to arrange the control system such that the safety switch or several safety switches around the on-switch must be actuated simultaneously with the on-switch in order to have it respond. In this case the field on the operating panel should be touched at exactly the right spot. Also in this case an unintentional activation of the on-switch is almost or even completely impossible.

The safety switch may for instance consist of a wire or similar, extending circumferentially around the circuit of the on-switch, but it may also include a plurality of circuits spaced circumferentially around the on-switch. In the latter case, the arrangement may be such that all circuits of the safety switch must be activated to activate the on-switch. Of course the circuits must be positioned close to a small on-switch so as to allow activation by one finger. In principle it would also be possible that the plurality of safety switches themselves form the on-switch if they are actuated simultaneously. In that case, there is only a visual representation on the control panel showing an on- switch centrally between the safety switches.

To obtain a convenient actuation of the capacitive switch(es) of the control system the invention proposes to provide the control system with an adjustable threshold to respond to the capacitance change in the capacitive switch.

This adjustment may be done once by the manufacturer but it could also be possible to equip the control system with an adjuster to enable a user to set a convenient response level.

The safety of the machine may further be increased in an embodiment wherein the front plate of the machine is removable by using a capacitive switch of the control system or a dedicated capacitive switch to check the presence of the front plate.

As removal of the front plate changes the capacitance in a capacitive switch this can be measured and used to check the presence of the plate. The system can then be arranged such that the control system is inactivated if the front plate is removed thereby avoiding dangerous situations.

In an advantegeous embodiment of the invention the control system comprises an off-switch including a test circuit testing the function of the off-switch automatically in regular intervals.

In this manner the reliability of the machine is enhanced since it is ensured that it can always be switched off, and if the off-switch is defective, the control system can detect that and inactivate the machine automatically. The regular interval may be very short, in the order of seconds or fractions of seconds.

The control system may conveniently comprise a microprocessor which includes a test circuit whichresets the microprocessor of the control system if the microprocessor does not respond correctly to the test signal.

Additionally or alternatively, the control system may comprise a microprocessor which includes a test circuit resetting a relay, for example to disconnect the machine from the mains, if the microprocessor does not respond correctly to the test signal.

This watchdog function inside or outside the microprocessor further enhances the safety and reliability of the control system.

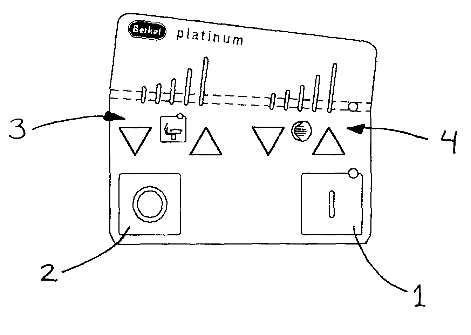

In the drawing there is shown an embodiment of a front plate of the control panel of a slicer according ot the invention.

This front plate may form part of the housing of the slicer or may be a separate part. The front plate is preferably transparent and has fields showing a representation of the switches or adjusting means cooperating with capacitive switches positioned behind the respective fields on the front plate. The drawing shows an on-switch 1, an off-switch 2, slicing thickness adjustment switches and indications 3 and slicing knife speed adjustment switches and indications 4. Of course, additional switches are conceivable. The control panel has no moving parts and should be completely smooth and water tight, making the panel easy to clean and therefore hygienic, and water resistant.

From the foregoing it will be clear that the invention provides a control system which excells in safety, hygiene and convenience.

The invention is not restricted to the embodiment shown in the drawing and described hereinbefore which may be varied in different manners within the scope of the invention. For example, the control system may also be used in other equipment where safety, hygiene and/or water resistance are of great importance, such as food processing equipment and medical equipment.

## Claims

1. A control system for a machine comprising a microprocessor, and an operating panel, including a front plate having a defined field for an on-switch and one or more safety switches each comprising a capacitive switch arranged to provide said field behind the front plate and being included in a circuit of the control system, characterized in that there is arranged at least one said safety switch at least partly around the position of the defined field for the on-switch and connected to the microprocessor to prevent the functioning of the on-switch if the safety switch is activated or not activated as appropriate.

2. A control system according to claim 1, wherein the or each safety switch includes an adjustable threshold to respond to the capacitance change in the capacitive switch.

3. A control system according to claim 1 or 2, wherein the front plate is removable and the control system is adapted to check the presence of the front plate by means of the capacitive switch or another dedicated capacitive switch.

4. A control system according to one of the preceding claims, further comprising an off-switch including a test circuit arranged to test the functioning of the off-switch automatically at regular intervals.

5. A control system according to one of the preceding claims, further including a microprocessor including a test circuit arranged to reset the microprocessor of the control circuit if the microprocessor does not respond correctly to the test signal.

6. A control system according to Claim 5, wherein the control system includes a microprocessor further including a test circuit which resets a relay to disconnect the machine from the mains if the microprocessor does not respond correctly to the test signal.

7. An operating panel for a machine including a control system as claimed in any preceding claim.

8. A slicer comprising a control system as claimed in any one of Claims 1 to 6 or an operating panel as claimed in Claim 7.

9. A slicer as claied in Claim 8, further including a removable housing with a front plate or a removable front plate forming part of the operating panel and covering the on-switch, the control system being arranged to determine the presence of the front plate by means of one or more of the safety switches.
